# EUROPÄISCHE PATENTSCHRIFT

(11) **EP 0 453 769 B1**
(45) Veröffentlichungstag und Bekanntmachung des Hinweises auf die Patenterteilung: **18.11.1993**
(21) Anmeldenummer: 91104445.1
(22) Anmeldetag: 21.03.1991
(51) Int. Cl.: B60P 3/38, B62D 33/06

(54) **Klappbare Schlafliege im Fahrerhaus eines Nutzfahrzeuges**
Hinged bunk in a driver's cab of a utility vehicle
Couchette à bascule pour la cabine du routier d'un véhicule utilitaire

(30) Priorität: 27.04.1990 DE 4013666
(43) Veröffentlichungstag der Anmeldung: 30.10.1991
(73) Patentinhaber: MAN Nutzfahrzeuge Aktiengesellschaft, 80976 München (DE)
(72) Erfinder: Watzek, Gerhard, W-8000 München 45 (DE); Knecht, Stefan, W-8000 München 21 (DE)

(56) Entgegenhaltungen:
- EP-A- 0 001 230
- DE-A- 3 814 537
- DE-A- 3 929 784

## Beschreibung

Die Erfindung bezieht sich als Zusatzpatent zu DE-A-3 929 784 auf eine klappbare Schlafliege im Fahrerhaus eines Nutzfahrzeuges, insbesondere eines Lkw's, mit für die horizontale Gebrauchslage und die hochgeklappte Staulage unterschiedlichen Verriegelungssystemen, wobei die Schnapper bzw. Sperrklinken wandseitig ortsfest und die Fangelemente an der Schlafliege, mit dieser verschwenkbar, angeordnet sind.

Der Erfindung liegt die Aufgabe zugrunde, die Einrichtung nach Patentanmeldung DE-A-3 929 784 zu verbessern und sicherer zu gestalten.

Dies wird erfindungsgemäß dadurch erreicht, daß die Verriegelungseinrichtung für die hochgeklappte Staulage aus einem im Seitenwandbereich des Fahrerhaus angeordneten Kurbelgetriebe mit einer von einem Lenker angelenkte Sperrklinke und einem fest mit der schwenkbaren Schlafliege verbundenen Widerlager besteht. Solcherart wird durch Hintergreifen der Sperrklinke am Widerlager eine sichere Staulage der Schlafliege erzielt.

Die Erfindung ist dahingehend weitergebildet, daß der Lenker als Winkelhebel ausgebildet ist, dessen Hebelarm über ein Langloch mit einem Stift der Sperrklinke verbunden ist, die, als Haken mit Anlaufschräge ausgebildet, mit ihrem einem Ende drehbar im Seitenwandbereich gelagert ist und zwischen dem Hebelarm des Lenkers und einem festen Punkt des Seitenwandbereich eine Zugfeder als Rückholfeder angeordnet ist.

Auf diese Weise kann die Sperrklinke gegen die Kraft der Zugfeder von dem Widerlager über die Schräge soweit hinausgedrückt werden, daß das Widerlager den Scheitel der Schräge überwindet und die Sperrklinke hinter das Widerlager, dieses gegen den Anschlag verrastend, einfällt. Der erforderliche Freiheitsgrad in der Gelenkverbindung zwischen dem Lenker und der Sperrklinke wird durch die Langloch-Stiftanordnung erzielt.

Nach einer vorteilhaften Ausführungsform weist die Koppelstange an einem Ende ein Hakenelement mit einer in eine einseitig offene Öse endenden Abrollfläche auf, wobei die Öse einen am Ende des Hebelarms angeordneten Stift haltend umgreift. Dies ermöglicht, daß sich bei Ausrücken des Lenkers infolge Verschiebung durch die Sperrklinke der endseitige Stift des Lenkers an der Abrollbahn des Hakenelementes entlang bewegen kann und somit vermieden wird, daß die Koppel den Handgriff ausrückt und dieser störend in den Innenbereich des Fahrerraumes hineinragt.

Nach einem anderen Merkmal der Erfindung ist das Hakenelement über eine Zugfeder mit einem ortsfesten Punkt der Seitenwand verbunden. Solcherart steht die Koppel mit dem Hakenelement immer unter Zugspannung und kann auch dann nicht herunterfallen, wenn der Lenker mit seinem Hebelarm und Stift aus der Öse ausgekoppelt wird und sich entlang der Abrollfläche nach innen bewegt.

Nach einem weiteren Merkmal der Erfindung ist im Seitenwandbereich ein Anschlag vorgesehen, der den Schwenkweg des Widerlagers und damit auch der Schlafliege begrenzt. In Weiterbildung dieses Merkmals ist an dem Anschlag im Kontaktbereich des Widerlagers ein elastisches Element vorgesehen. Auf diese Weise ist die Schlafliege sicher verspannt und rüttelsicher, so daß jegliches Klappern und damit Geräusche vermieden werden. Die Erfindung ist in einem Ausführungsbeispiel dargestellt.

Es zeigen:
- Fig. 1: eine Schlafliege mit Verriegelungseinrichtung in der Seitenansicht,
- Fig. 2: eine Schlafliege mit Verriegelungseinrichtung in der Draufsicht.

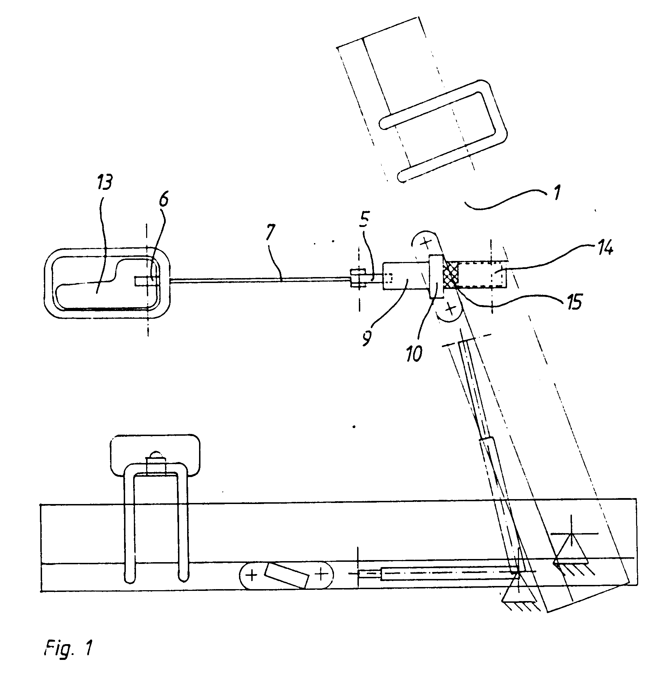

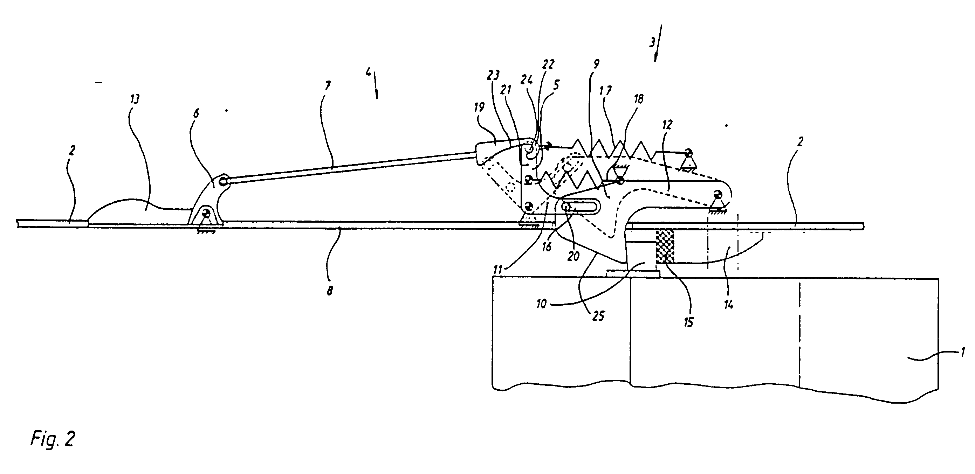

Aus den Figuren 1 und 2 ist eine im Seitenwandbereich 2 des Fahrerhauses angeordnete Verriegelungseinrichtung 3 zum Festlegen der Schlafliege 1 in Staulage zu entnehmen. An der Seitenwand 2 ist ein Kurbelgetriebe 4 angeordnet, das aus einem Steg 8 als einem Teil der Seitenwand 2, einer Koppel 7 und Lenkern 5, 6 besteht. Der Lenker 5 ist als Winkelhebel ausgebildet, dessen Hebelarm 11 mit einer als Haken ausgebildeten Sperrklinke 9 beweglich verbunden ist. Dazu ist im Hebelarm 11 ein Schlitz 16 vorgesehen, in dem der fest mit der Sperrklinke verbundene Stift 20 geführt ist. Das eine Ende der Sperrklinke 9 ist drehbar im Seitenwandbereich 2 angeordnet. Anderenendes ist die Sperrklinke 9 hakenförmig ausgebildet und mit einer Anlaufschräge 25 versehen. Etwa in der Mitte des Hebelarmes 21 des Lenkers 5 greift eine Zugfeder 18 an, die mit ihrem anderen Ende fest im Seitenwandbereich 2 angeordnet ist. Die Koppel 4 weist an einem Ende ein Hakenelement 19 auf, dessen freies Ende eine nach Innen offene Öse 22 ist, an die sich nach innen eine Abrollfläche 23 anschließt. Am Ende des Hebelarmes 21 ist ein Stift 24 fest angebracht, der in die offene Öse 22 eingreift. An der Öse greift außen eine Zugfeder 17 an, die anderenendes fest an der Seitenwand 2 befestigt ist. Auch der Lenker 6 ist als Winkelhebel ausgebildet, dessen freier Hebelarm 13 als Handgriff zur Betätigung der Verriegelungsvorrichtung ausgebildet ist. An der Schlafliege fest angebracht ist ein Widerlager 10, das in Staulage der Schlafliege 1 von der Sperrklinke 9 hintergriffen wird. Im Seitenwandbereich 2 ist fest zur Seitenwand ein Anschlag 14 angeordnet, der mit einem elastischen Element 15 versehen ist.

Wird nun die Schlafliege aus der Gebrauchslage in die Staulage geschwenkt, so gleitet das Widerlager 10 an der Schräge 25 der Sperrklinke 9 auf, drückt somit die Sperrklinke gegen die Federwirkung der Feder 18 nach außen und wird, sobald es den Scheitel der Schräge 25 überschritten hat, von der Sperrklinke hintergriffen, wobei das Widerlager 10 nun fest zwischen Sperrklinke 9 und Anschlag 14 mit elastischem Element 15 verspannt ist. Beim Eindrücken der Sperrklinke in den Seitenwandbereich 2 wird zwar der Lenker 5 über Stift 20 und Schlitz 16 geschwenkt, nimmt aber Koppel 7 nicht mit, da infolge der offenen Öse 22 mit Stift 24 eine Freilauffunktion gegeben ist und der Stift 24 frei an der Abrollfläche 23 abläuft.

Dies bewirkt wiederum, daß der Handgriff 13 nicht störend in den Innenraum des Fahrzeuges hineingedrückt wird. Soll die Schlafliege aus der Staulage in Gebrauchslage geschwenkt werden, so wird der Handgriff 13 betätigt und die Sperrklinke 9 aus der sperrenden Position über das Kurbelgetriebe ausgehoben.

### Bezugszeichenliste

- 1: Schlafliege
- 2: Seitenwandbereich des Fahrerhauses
- 3: Verriegelungseinrichtung
- 4: Kurbelgetriebe
- 5: Lenker
- 6: Lenker
- 7: Koppel
- 8: Steg
- 9: Sperrklinke
- 10: Widerlager
- 11: Hebelarm von 5
- 12: Ende von 9
- 13: Hebelarm von 6 (Handgriff)
- 14: Anschlag
- 15: elastisches Element
- 16: Schlitz in 11
- 17: Zugfeder
- 18: Zugfeder
- 19: Hakenelement an 7
- 20: Stift an 9
- 21: Hebelarm von 5
- 22: Öse an 19
- 23: Abrollfläche an 19
- 24: Stift an 21
- 25: Anlaufschräge an 9

## Patentansprüche

1. Klappbare Schlafliege im Fahrerhaus eines Nutzfahrzeuges, insbesondere eines Lkw's, mit für die horizontale Gebrauchslage und die hochgeklappte Staulage unterschiedlichen Verriegelungssystemen, wobei die Schnapper bzw. Sperrklinken wandseitig ortsfest und die Fangelemente an der Schlafliege, mit dieser verschwenkbar, angeordnet sind, dadurch gekennzeichnet, daß die Verriegelungseinrichtung (3) für die hochgeklappte Staulage aus einem im Seitenwandbereich (2) des Fahrerhauses angeordneten Kurbelgetriebe (4) mit einer von einem Lenker (5) angelenkten Sperrklinke (9) und einem fest mit der verschwenkbaren Schlafliege (1) verbundenen Widerlager (10) besteht.

2. Klappbare Schlafliege nach Anspruch 1, dadurch gekennzeichnet, daß der Lenker (5) als Winkelhebel ausgebildet ist, dessen Hebelarm (11) über ein Langloch (16) mit einem Stift (20) der Sperrklinke (9) verbunden ist, die, als Haken mit Anlaufschräge 25 ausgebildet, mit ihrem einen Ende (12) drehbar im Seitenwandbereich (2) gelagert ist, und zwischen dem Hebelarm (21) des Lenkers (5) und einem festen Punkt im Seitenwandbereich (2) eine Zugfeder (18) als Rückholfeder angeordnet ist.

3. Klappbare Schlafliege nach Anspruch 1 oder 2, dadurch gekennzeichnet, daß die Koppelstange (7) an einem Ende ein Hakenelement (19) mit einer in eine einseitig offene Öse (22) endenden Abrollfläche (23) aufweist und die Öse (22) einen am Ende des Hebelarm (21) angeordneten Stift (24) haltend umgreift.

4. Klappbare Schlafliege nach den Ansprüchen 1 bis 3, dadurch gekennzeichnet, daß das Hakenelement (19) über eine Zugfeder (17) mit einem ortsfesten Punkt des Seitenwandbereiches (2) verbunden ist.

5. Klappbare Schlafliege nach einem oder mehreren der Ansprüche 1 bis 4, dadurch gekennzeichnet, daß der Lenker (6) des Kurbelgetriebes (4) ebenfalls ein Winkelhebel ist, dessen freier Hebelarm (13) als Handgriff ausgebildet ist.

6. Klappbare Schlafliege nach einem oder mehreren der Ansprüche 1 bis 5, dadurch gekennzeichnet, daß im Seitenwandbereich (2) ein Anschlag (14) vorgesehen ist, der den Schwenkweg des Widerlagers (10) und damit auch der Schlafliege (1) begrenzt.

7. Klappbare Schlafliege nach Anspruch 6, dadurch gekennzeichnet, daß an dem Anschlag (14) im Kontaktbereich des Widerlagers (10) ein elastisches Element (15) vorgesehen ist, das eine klapperfreie Verspannung vonSperrklinke (9) und Gegenlager (14) gewährleistet.

## Claims

1. Folding bunk (1) in the cab of a commercial vehicle, particularly a truck, with different retaining and locking systems for the horizontal utilisation and the folded vertical storage position of the bunk, the snapping devices and detent latches being mounted on the wall in a stationary manner and the retaining elements being mounted on the bunk so that they slew with it, characterised in that the locking system (3) for the folded vertical storage position consists of a crank mechanism (4) with a detent latch (9) linked to a guide rod (5), which crank mechanism is installed in the lateral wall area (2) of the cab, and a support (10) firmly connected with the folding bunk (1).

2. Folding bunk as under Claim 1, characterised in that the guide rod (5) is designed as an angle lever, whose lever arm (11) is connected with a pin (20) of the detent latch (9) via an elongated hole (16), which detent latch (9) is designed as a hook with a sloping side (25) and whose one end (12) is swivel-mounted in the lateral wall area (2), and that a tension spring (18) is mounted as a return spring between the lever arm (21) of the guide rod (5) and a fixed point in the lateral wall area (2).

3. Folding bunk as under Claim 1 or 2, characterised in that the coupler rod (7) has at one end a hook element (19) with a rolling surface (23) that ends in a loop (22) open at one side, and that the loop (22) clasps in a retaining manner a pin (24) mounted on the end of the lever arm (21).

4. Folding bunk as under the Claims 1 to 3, characterised in that the hook element (19) is linked to a stationary point of the lateral wall area (2) via a tension spring (17).

5. Folding bunk as under one or more of the Claims 1 to 4, characterised in that the guide rod (6) of the crank mechanism (4) is also an angle lever, whose free lever arm (13) is designed as a handle.

6. Folding bunk as under one or more of the Claims 1 to 5, characterised in that the lateral wall area (2) is equipped with a stop (14) which limits the slewing path of the support (10) and, consequently, that of the bunk (1) too.

7. Folding bunk as under Claim 6, characterised in that the stop (14) in the contact area of the support (10) is equipped with an elastic element (15) which ensures a rattle-free tensioning of the detent latch (9) and the support (14).

## Revendications

1. Couchette à bascule pour cabine, en particulier d'un camion, comprenant des dispositifs de verrouillage différents pour la position horizontale d'utilisation et la position de rangement relevée, les cliquets ou verrous étant situés à un emplacement fixe de la zone de la paroi latérale et les éléments de prise étant quant à eux à un emplacement fixe de la couchette et basculent avec celle-ci, caractérisée en ce que les dispositifs de verrouillage (3) pour la position de rangement relevée se composent d'une transmission à manivelle (4) située dans la zone latérale de la cabine comprenant un verrou (9) guidé par un bras (5) et, d'un appui (10) fixé sur la couchette basculable (1).

2. Couchette à bascule selon la revendication 1, caractérisée en ce que le bras (5) est réalisé sous la forme d'un levier coudé dont le bras de levier (11) est relié par un trou oblong (16) à une tige (20) du verrou (9), verrou (9) qui est réalisée sous forme d'un crochet ayant une rampe inclinée (25), dont l'une des extrémités (12) est fixée libre en rotation dans la zone de la paroi latérale de la cabine (2), un ressort de traction (18) se trouvant comme ressort de rappel entre le bras de levier (21) du bras (5) et un point fixe de la zone de la paroi latérale (2).

3. Couchette à bascule selon la revendication 1 ou 2, caractérisée en ce que la bielle (7) présente à l'une de ses extrémités, un crochet (19) ayant une surface de roulement (23) se terminant par un oeillet (22) ouvert d'un côté et, l'oeillet maintenant en l'entourant, une tige (24) se trouvant à l'extrémité du bras de levier (21).

4. Couchette à bascule selon les revendications 1 à 3, caractérisée en ce que le crochet (19) est relié par un ressort de traction (17) à un point fixe de la zone de la paroi latérale (2).

5. Couchette à bascule selon les revendications 1 à 4, caractérisée en ce que le bras (6) de la transmission à manivelle (4) est également un levier coudé dont le bras de levier libre (13) est en forme de poignée.

6. Couchette à bascule selon l'une ou plusieurs des revendications 1 à 5, caractérisée en ce qu'une butée (14) est prévue dans la zone de la paroi latérale (2), butée qui délimite la course de basculement de l'appui et par là même de la couchette 1.

7. Couchette à bascule selon la revendication 6, caractérisée en ce que la butée (14) comprend un élément élastique (15) dont la zone de contact avec l'appui (10) pourrait réaliser une tension sans battement du verrou (9) et du contre appui (14).
